# EUROPÄISCHE PATENTSCHRIFT

(11) **EP 4 401 601 B1**
(45) Veröffentlichungstag und Bekanntmachung des Hinweises auf die Patenterteilung: **18.02.2026**
(21) Anmeldenummer: 22776882.7
(22) Anmeldetag: 02.09.2022
(51) Int. Cl.: A44B 11/25, B60R 16/03, B60R 22/48

(54) **GURTZUNGE UND SICHERHEITSGURTEINRICHTUNG**
SEAT BELT TONGUE AND SEAT BELT DEVICE
LANGUETTE DE CEINTURE DE SÉCURITÉ ET DISPOSITIF DE CEINTURE DE SÉCURITÉ

(30) Priorität: 16.09.2021 DE 102021210252
(43) Veröffentlichungstag der Anmeldung: 24.07.2024
(73) Patentinhaber: Autoliv Development AB, 447 83 Vårgårda (SE)
(72) Erfinder: MELNIKOVA, Larissa, 10621 Tallinn (EE); OTS, Aidu, 10621 Talinn (EE)
(74) Vertreter: Müller Verweyen
(86) Internationale Anmeldenummer: PCT/EP2022/074416
(87) Internationale Veröffentlichungsnummer: WO 2023/041347

(56) Entgegenhaltungen:
- EP-A1- 2 460 697
- WO-A1-2014/152152
- WO-A1-2019/072748
- WO-A1-2020/144249
- US-A1- 2015 145 666

## Beschreibung

Die vorliegende Erfindung betrifft eine Gurtzunge mit den Merkmalen des Oberbegriffs von Anspruchs 1, eine Sicherheitsgurteinrichtung mit den Merkmalen des Oberbegriffs von Anspruch 8 und ein Herstellverfahren für eine Gurtzunge mit den Merkmalen des Oberbegriffs von Anspruch 10.

Bei Sicherheitsgurteinrichtung können für zusätzliche Funktionen verschiedene elektrische oder elektronische Komponenten, wie beispielsweise Mikrophone, im Sicherheitsgurt vorgesehen sein. Diese Komponenten müssen für einen dauerhaften Betrieb mit elektrischer Leistung versorgt werden. Ein Anschluss eines Mikrophones im Sicherheitsgurt ist beispielsweise aus der DE 10 2005 002 865 B3 bekannt.

Bei Dreipunkt-Gurten ist in der Regel ein Ende des Sicherheitsgurts an einem zumeist als Ankerplatte bezeichneten Befestigungselement an einem festen Anschlagspunkt der Fahrzeugstruktur oder des Fahrzeugsitzes befestigt, wo die Ankopplung der notwendigen elektrischen Leiter in einfacher Weise erfolgen kann.

Ferner ist aus der DE 10 2019 103 460 A1 eine Sicherheitsgurteinrichtung mit einer elektronischen Vorrichtung bekannt, bei welcher über eine außerhalb des Gurtbandes angeordnete Sendeeinheit induktiv Energie auf eine entsprechende Empfangseinheit im Gurtband übertragen wird. Hierbei können zur Kompensation der Position des Gurtbands bei der Benutzung mehrere versetzte Spulen als Sende- und/oder Empfangseinheit eingesetzt werden.

Ferner ist in der noch nichtveröffentlichten Patentanmeldung DE 10 2020 133 574.1 der Anmelderin eine Sicherheitsgurteinrichtung für Kraftfahrzeuge beschrieben, welche ein Gurtschloss mit einem Einführschlitz, eine in den Einführschlitz des Gurtschlosses einsteckbare und darin verriegelbare Gurtzunge, und einen Sicherheitsgurt aufweist. Die Gurtzunge selbst weist einen Grundkörper und eine Verkleidung auf, und der Sicherheitsgurt verläuft durch einen Bügel der Gurtzunge. Ferner sind das Gurtschloss und die Gurtzunge dazu eingerichtet, von dem Gurtschloss elektrische Leistung und/oder Signale auf die Gurtzunge zu übertragen.

Eine Übertragung von elektrischer Leistung und/oder Signalen von dem Gurtschloss auf die Gurtzunge und umgekehrt ermöglicht eine entsprechende Übertragung der Leistung oder der Signale, ohne dass dazu ein fester Anschlagspunkt der Sicherheitsgurteinrichtung an der Fahrzeugstruktur oder an dem Fahrzeugsitz erforderlich ist. Damit können die Signale und/oder die Leistung auch in Sicherheitsgurteinrichtungen mit sogenannten Doppel-Retraktoren übertragen werden, welche bei einem Dreipunktgurt für Brust- und Beckengurt jeweils separate Retraktoren aufweisen, so dass der Sicherheitsgurt keinen festen Anschlagspunkt an der Fahrzeugstruktur oder an dem Fahrzeugsitz aufweisen muss. Die Übertragung der Signale bzw. der Leistung erfolgt in diesem Fall über das an der Fahrzeugstruktur oder an dem Fahrzeugsitz befestigten Gurtschloss auf die darin verriegelte Gurtzunge und umgekehrt.

In der DE 10 2020 133 574.1 ist zur Übertragung der Signale an der Gurtzunge eine Induktorspule vorgesehen. Die Gurtzunge weist einen Grundkörper z.B. in Form einer Metallplatine auf, welche zu beiden Seiten hin durch zwei Verkleidungsteile einer zweiteiligen Gurtzungenverkleidung abgedeckt ist. Eines der Verkleidungsteile weist hier eine Aufnahme zur Aufnahme der Induktorspule und des elektrischen Steckanschlusses auf. Die Induktorspule und der elektrische Steckanschluss sind dann nach der Befestigung des Verkleidungsteils an dem Grundkörper zwischen den beiden Teilen fixiert.

Zur Montage der Gurtzunge sind damit vier Schritte erforderlich, Einlegen der Induktorspule und Einlegen des elektrischen Steckanschlusses in die jeweiligen Aufnahmen des Verkleidungsteils und Verbinden der beiden Verkleidungsteile mit dem Grundkörper, wobei beim Verbinden der Verkleidungsteile darauf geachtet werden muss, dass die Induktorspule und der elektrische Steckanschluss nicht unbeabsichtigt aus den Aufnahmen bzw. ihrer vorbestimmten Position herausrutschen. Insgesamt ergibt sich dadurch ein komplexer Montagevorgang.

Aus der Druckschrift WO 2019/072748 A1 ist ferner ein Gurtschloss mit einem RFID-Transponder bekannt, welcher mittels eines Gehäuses an einer Platine einer Gurtzunge vorfixiert und mittels einer Umspritzung fixiert ist. WO 2019/072748 A1 offenbart die Präambel des Anspruchs 1.

Vor diesem Hintergrund liegt der Erfindung die Aufgabe zugrunde, eine Gurtzunge mit wenigstens einem elektronischen Bauteil und ein Montageverfahren für eine derartige Gurtzunge zu schaffen, welche mit einem geringeren Montageaufwand prozesssicher montiert werden kann bzw. welches eine Montage der Gurtzunge mit einem reduzierten Aufwand ermöglicht.

Zur Lösung der Aufgabe wird ein Gurtschloss mit den Merkmalen von Anspruch 1 und eine Sicherheitsgurteinrichtung mit den Merkmalen von Anspruch 8 und ein Herstellverfahren mit den Merkmalen von Anspruch 10 vorgeschlagen. Weitere bevorzugte Weiterbildungen der Erfindung sind den Unteransprüchen, den Figuren und der zugehörigen Beschreibung zu entnehmen.

Nach Anspruch 1 wird zur Lösung der Aufgabe eine Gurtzunge vorgeschlagen, bei der der Grundkörper wenigstens zwei Öffnungen aufweist, welche durch einen Steg voneinander getrennt sind, und die Öffnungen wenigstens im Bereich der den Steg begrenzenden Randseiten verdickt sind, und das Trägerteil wenigstens zwischen den verdickten Randseiten der Öffnungen an dem Grundkörper formschlüssig vorfixiert ist. Durch die Öffnungen und den dazwischen angeordneten Steg mit den verdickten Randseiten der Öffnungen wird eine praktische Klemmfläche geschaffen, an der das Trägerteil verclipst werden kann. Die Öffnungen können z.B. zur Ausbildung von einem oder zwei Stegen zur Halterung von einem oder mehrerer Gurtbandenden in Form von Gurtbandschlaufen genutzt werden. Die Öffnungen und der dazwischen vorgesehene Steg sind damit länglich mit jeweils zwei länglichen parallel verlaufenden Längsseiten ausgebildet.

Weiter wird vorgeschlagen, dass auf dem Trägerteil wenigstens ein elektrischer Kontakt und eine den elektrischen Kontakt mit dem elektrischen Bauteil verbindende elektrische Leitung vorgesehen ist. Durch den elektrischen Kontakt und die elektrische Leitung wird eine externe elektrische Kontaktierung des elektronischen Bauteils ermöglicht.

Weiter wird vorgeschlagen, dass das elektronische Bauteil, der elektrische Kontakt und die elektrische Leitung als ein vorgefertigtes Verbundbauteil auf dem Trägerteil angeordnet sind. Das Verbundbauteil mit dem elektronischen Bauteil, dem elektrischen Kontakt und der elektrischen Leitung kann damit auch als eine vorgefertigte Elektronikbaugruppe verstanden werden, welche dann in einem ersten Montageschritt an dem Trägerteil, anschließend in einem zweiten Montageschritt zusammen mit dem Trägerteil an dem Grundkörper vorfixiert und in einem dritten Montage- oder Fertigungsschritt durch die Verkleidung zur Außenseite hin abgedeckt wird.

Weiter wird vorgeschlagen, dass das elektronische Bauteil und/oder der elektrische Kontakt und/oder die elektrische Leitung auf der dem Grundkörper der Gurtzunge zugewandten Seite des Trägerteils angeordnet ist oder sind. Durch die vorgeschlagene Anordnung wird das elektronische Bauteil und/oder der elektrische Kontakt und/oder die elektrische Leitung zu der Seite der Verkleidung hin von dem Trägerteil abgedeckt und damit zusätzlich vor mechanischen Einwirkungen während des Aufbringens der Verkleidung geschützt. Ferner kann das Trägerteil dadurch während des Aufsetzens auf den Grundkörper von der Seite gehandhabt werden, auf welcher das elektronische Bauteil nicht angeordnet ist, wodurch der Montagevorgang zusätzlich vereinfacht werden kann. Außerdem kann dadurch die Schadenswahrscheinlichkeit des elektronischen Bauteils, der elektrischen Leitung und/oder des Kontaktes während der Montage reduziert werden.

Weiter wird vorgeschlagen, dass das Trägerteil ein flächiges Bauteil mit einer an die Oberfläche des Grundkörpers angepassten Formgebung ist. Damit wird der Grundkörper im Bereich des Trägerteils um die Dicke des Trägerteils verdickt. Außerdem wird das Trägerteil dadurch zusätzlich mechanisch stabil flächig von dem Grundkörper unterstützt.

Weiter wird vorgeschlagen, dass die Verkleidung durch eine Umspritzung gebildet ist. Der Vorteil dieser Lösung ist darin zu sehen, dass das Trägerteil mit dem elektronischen Bauteil dadurch besonders kompakt und fest an dem Grundkörper, insbesondere spiel- und klapperfrei, gehalten ist. Außerdem kann die Gurtzunge dadurch besonders kostengünstig in einer großen Stückzahl in einem Kunststoffspritzverfahren mit der Verkleidung versehen werden. Das Trägerteil wird durch die Umspritzung des Verkleidungsteils praktisch an den Grundkörper der Gurtzunge angepresst, wobei das Trägerteil während des Spritzvorganges durch seine Vorfixierung an dem Grundkörper in Position gehalten wird.

Weiter wird eine Sicherheitsgurteinrichtung mit einer derartigen Gurtzunge zur Lösung der Aufgabe vorgeschlagen, welche zwei Gurtaufroller aufweist, auf denen jeweils ein Gurtbandabschnitt mit einem ersten Ende aufwickelbar ist, und dass die Gurtbandabschnitte mit jeweils einem zweiten Ende mit der Gurtzunge verbunden sind. Die Sicherheitsgurteinrichtung weist damit zwei unabhängig voneinander aufwickelbare und voneinander getrennte Gurtbandabschnitte auf, welche mit ihren zweiten Enden an der erfindungsgemäßen Gurtzunge gehalten sind.

Weiter wird vorgeschlagen, dass ein Gurtschloss vorgesehen ist, welches ein mit dem elektronischen Bauteil der Gurtzunge zusammenwirkendes zweites elektronisches Bauteil aufweist. Das Gurtschloss ist fahrzeugfest entweder an einem Fahrzeugsitz oder an der Fahrzeugstruktur befestigt und kann dadurch elektronisch mit einer fahrzeugfesten elektronischen Datenverarbeitungseinrichtung verbunden werden, ohne dass dazu eine bewegte Stelle überbrückt werden muss. Das zweite elektronische Bauteil in dem Gurtschloss wirkt mit dem elektronischen Bauteil der Gurtzunge zusammen und bildet die elektronische Schnittstelle zwischen dem elektronischen Bauteil der Gurtzunge und der fahrzeugfesten Datenverarbeitungseinrichtung.

Weiter wird zur Lösung der Aufgabe ein Herstellverfahren zur Herstellung einer erfindungsgemäßen Gurtzunge vorgeschlagen, bei dem das Trägerteil zusammen mit dem elektronischen Bauteil an dem Grundkörper vorfixiert wird, und das Trägerteil dann durch Aufbringen der Verkleidung zwischen dem Grundkörper und der Verkleidung abschließend fixiert wird, wobei gemäß einer weiteren bevorzugten Weiterentwicklung vorgeschlagen wird, dass die Verkleidung durch eine Umspritzung aufgebracht wird.

Die Erfindung wird im Folgenden anhand einer bevorzugten Ausführungsform unter Bezugnahme auf die beigefügten Figuren erläutert. Dabei zeigt
- Fig. 1A und 1B: einen Grundkörper mit einem Trägerteil und einer Verkleidung einer erfindungsgemäßen Gurtzunge in Explosionsdarstellung und im zusammengebauten Zustand; und
- Fig. 2: eine erfindungsgemäße Gurtzunge in verschiedenen Perspektiven und Schnittdarstellungen; und
- Fig. 3: einen Grundkörper der Gurtzunge mit einem Trägerteil in einem ersten Schnitt; und
- Fig. 4: einen Grundkörper der Gurtzunge mit einem Trägerteil in einem zweiten Schnitt; und
- Fig. 5: eine Schnittdarstellung des Grundkörpers ohne Trägerteil.

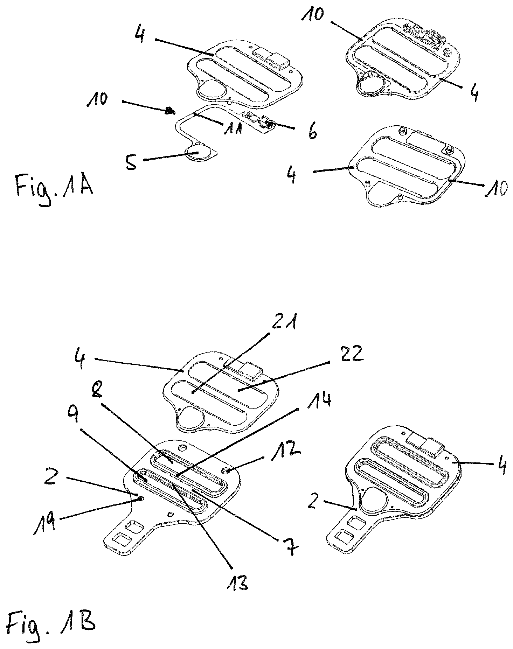

In der Figur 1A ist in der oberen Darstellung ein Trägerteil 4 und ein Verbundbauteil 10 mit einem elektronischen Bauteil 5 z.B. in Form einer Induktorspule, einem elektrischen Kontakt 6 und einer elektrischen Leitung 11 zu erkennen. Das Trägerteil 4 weist eine zu der Form des Verbundbauteils 10 formkorrespondierende Aufnahme auf, in welche das Verbundbauteil 10 eingelegt wird. Die Aufnahme in dem Trägerteil 4 ist dabei in ihrer Formgebung so an die Form des Verbundbauteils 10 angepasst, dass das Verbundbauteil 10 darin sowohl mit seinem elektronischen Bauteil 5 als auch mit dem elektrischen Kontakt 6 und der elektrischen Leitung 11 aufgenommen werden kann. In den rechten Darstellungen der Fig. 1A ist das Trägerteil 4 von der Oberseite und der Unterseite mit eingelegtem Verbundbauteil 10 zu erkennen.

Das Verbundbauteil 10 ist ein vorgefertigtes Bauteil, welches die elektrische Leitung 11, das elektronische Bauteil 5 und den Kontakt 6 aufweist. Das Verbundbauteil 10 kann zusätzlich ein Basisteil, z.B. in Form einer Folie, aufweisen, auf dem das elektronische Bauteil 5, die elektrische Leitung 11 und der Kontakt gehalten und zueinander fixiert sind. Das Basisteil gibt die Außenform des Verbundbauteils 10 vor und ist entsprechend der Außenform der Aufnahme in dem Trägerteil 4 geformt. Damit wird die Aufnahme in dem Trägerteil 4 zu dessen Unterseite hin durch das eingelegte Verbundbauteil 10 zu einer ebenen Fläche verschlossen, wie in der rechten unteren Darstellung der Unterseite des Trägerteils 4 der Figur 1A zu erkennen ist.

In der Fig. 1B ist das Trägerteil 4 entsprechend der oberen rechten Darstellung der Figur 1A mit dem eingelegten nicht zu erkennenden Verbundbauteil 10 und einem Grundkörper 2 in Form einer gestanzten Metallplatine zu erkennen. Der Grundkörper 2 weist zwei längliche parallelen Öffnungen 8 und 9 mit jeweils einer Randseite 13 und 14 auf, welche einen Steg 7 zwischen sich einschließen. Ferner sind an der Oberseite und der Unterseite zu den Öffnungen 8 und 9 des Grundkörpers 2 jeweils zwei paare von Rastöffnungen 12 und 19 vorgesehen. Das Trägerteil 4 wird zusammen mit dem Verbundbauteil 10 und dem daran gehaltenen elektronischen Bauteil 5 an dem Grundkörper 2 durch eine nachfolgend noch näher erläuterte Formschlussgestaltung vorfixiert.

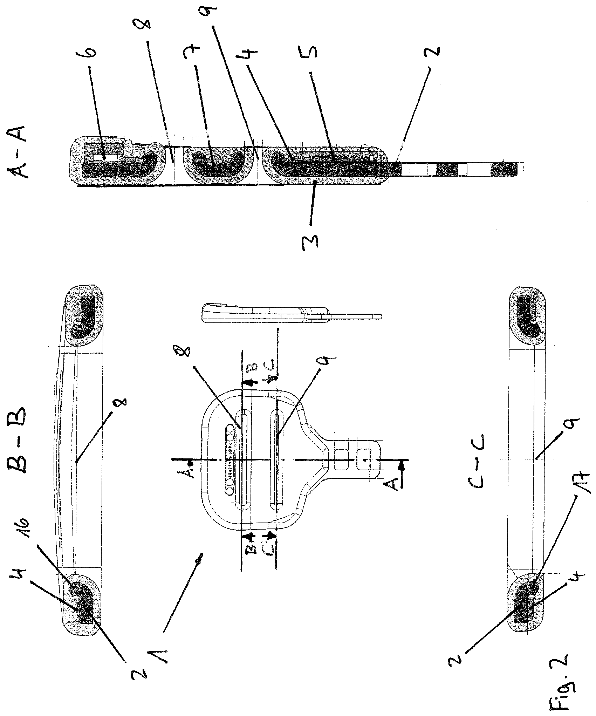

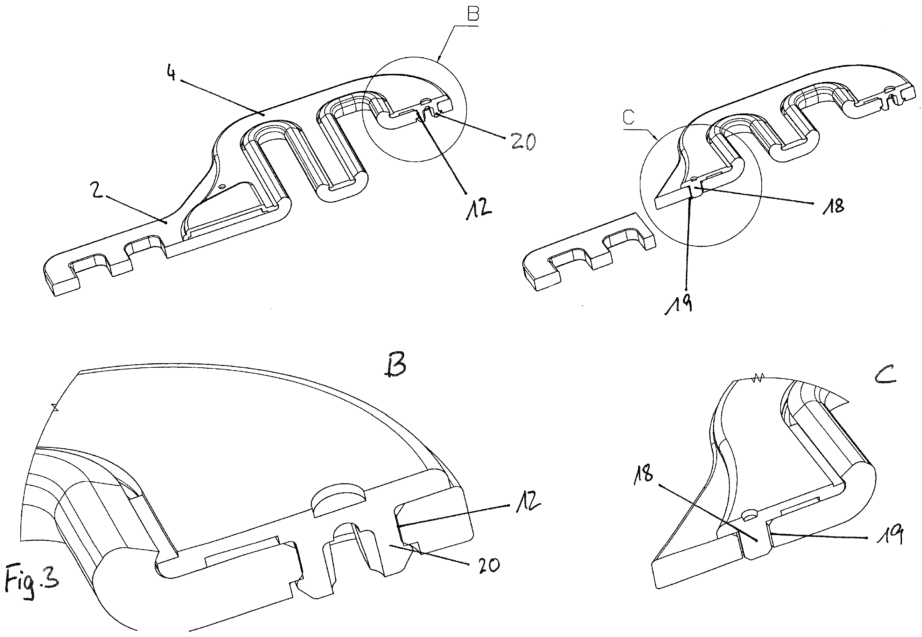

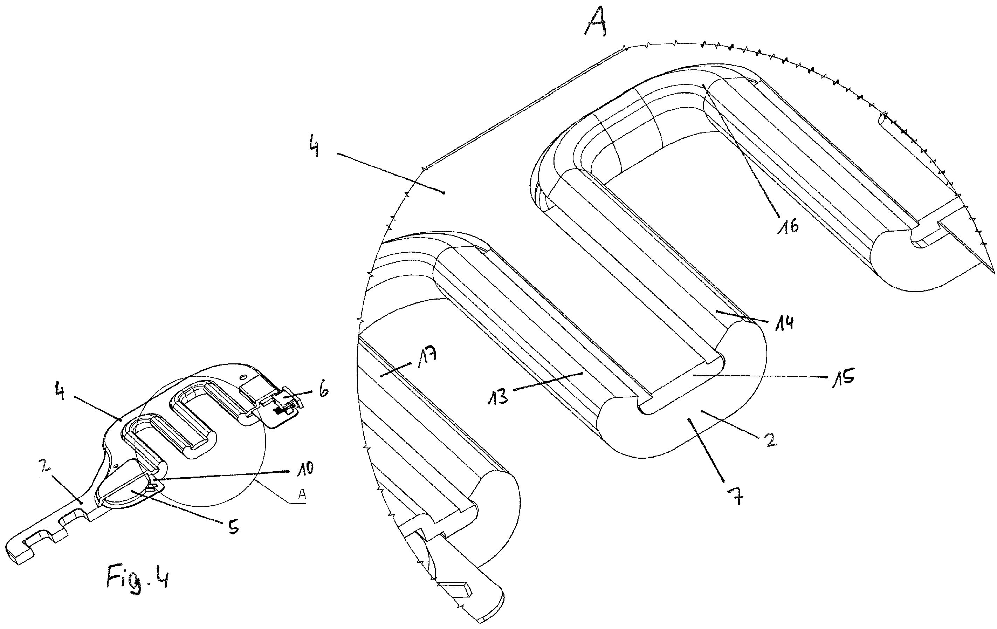

In der Figur 2 ist eine erfindungsgemäße Gurtzunge 1 mit dem Grundkörper 2, dem Trägerteil 4 und einer das Trägerteil 4 nach außen hin abdeckenden Verkleidung 3 zu erkennen. Der Grundkörper 2 ist an den Randseiten 13 und 14 verdickt, indem die Randseiten 13 und 14 jeweils plastisch zu einem Wulst 16 und 17 umgeformt sind, wie auch in der Figur 4 zu erkennen ist. Das Trägerteil 4 weist ebenfalls zwei Öffnungen 21 und 22 auf, welche etwas größer als die Öffnungen 8 und 9 des Grundkörpers 2 bemessen sind. Ferner sind an dem Trägerteil 4 in der Figur 3 zu erkennende Rastzapfen 18 und 20 vorgesehen, welche entsprechend der Anordnung der Rastlöcher 12 und 19 in dem Grundkörper 2 angeordnet sind.

Das Trägerteil 4 wird nun zusammen mit dem Verbundbauteil 10 entsprechend des in der Figur 1B gezeigten Montageschrittes an dem Grundkörper 2 vorfixiert, indem es mit den Rastzapfen 18 und 20 in die Rastlöcher 12 und 19 eingesetzt und mit den Öffnungen 21 und 22 über die verdickten Wülste 16 und 17 der Randseiten 13 und 14 der Öffnungen 8 und 9 des Grundkörpers 2 verclipst wird. Dabei wird sowohl durch die Rastzapfen 18 und 20 als auch über die Randseiten der Öffnungen 20 und 21 hinter den verdickten Randseiten 13 und 14 der Öffnungen 8 und 9 des Grundkörpers 2 eine Formschlussverbindung verwirklicht, durch welche das Trägerteil 4 anschließend an dem Grundkörper 2 vorfixiert ist. Dabei verrastet das Trägerteil 4 insbesondere mit dem zwischen den beiden Öffnungen 21 und 22 gebildeten, in der Figur 4 zu erkennenden Streifen 15 auf dem Steg 7 des Grundkörpers 2 zwischen den Wülsten 16 und 17 der Randseiten 13 und 14 der Öffnungen 8 und 9 des Grundkörpers 2.

Das elektronische Bauteil 5, die Leitung 11 und der elektrische Kontakt 6 sind über das Verbundbauteil 10 auf der Seite des Trägerteils 4 angeordnet, welche in der Befestigungsstellung des Trägerteils 4 dem Grundkörper 2 der Gurtzunge 1 zugewandt ist. Damit sind das elektronische Bauteil 5, die Leitung 11 und der Kontakt 6 zur Außenseite hin durch das Trägerteil 4 abgedeckt und werden dadurch beim Aufbringen der Verkleidung 3 zusätzlich vor mechanischen Einwirkungen geschützt.

Die Verkleidung 3 ist hier bevorzugt durch eine Kunststoffumspritzung verwirklicht, d.h. der Grundkörper 2 wird mit dem darauf gehaltenen Trägerteil 4 als vormontierte Baugruppe mit dem Verbundbauteil 10, dem darauf angeordneten elektronischen Bauteil 5, der Leitung 11 und dem Kontakt 6 in das Spritzgusswerkzeug eingelegt und mit dem Kunststoff umspritzt. Anschließend bildet die Kunststoffumspritzung eine feste Ummantelung des Grundkörpers 2 mit dem dazwischen verliersicher und klapperfrei fixierten Trägerteil 4. Es ist aber genauso denkbar, die Verkleidung 3 aus zwei oder mehr Verkleidungsteilen zu bilden, welche z.B. durch eine Clipsverbindung miteinander und an dem Grundkörper 2 verbunden sein können.

Das elektronische Bauteil 5 ist in dem vorliegenden Ausführungsbeispiel durch eine Induktorspule verwirklicht, welche so an der Gurtzunge 1 positioniert ist, dass sie beim Verriegeln der Gurtzunge 1 in einem Gurtschloss zu einer Überdeckung mit einem zweiten elektronischen Bauteil in Form einer an dem Gurtschloss gehaltenen weiteren Induktorspule gelangt. Hierdurch wird ein Signal erzeugt, welches einen Rückschluss auf den Verriegelungszustand der Gurtzunge 1 in dem Gurtschloss ermöglicht. Ferner liegt das elektronische Bauteil 5 der Gurtzunge dadurch dem zweiten elektronischen Bauteil an dem Gurtschloss gegenüber, so dass hierüber Signale und ggf. auch elektrische Leistung übertragen werden können. Hierzu können die elektronischen Bauteile 5 auch abweichend zu den Induktorspulen ausgebildet sein oder zusätzliche Komponenten umfassen.

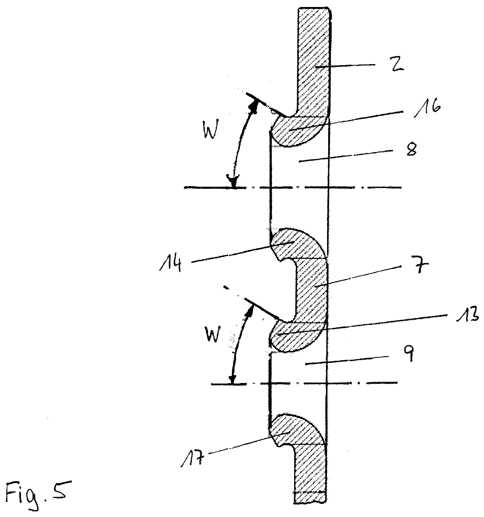

In der Figur 5 ist der Grundkörper 2 als Einzelteil in Schnittdarstellung zu erkennen. Die Wülste 16 und 17 der Randseiten 13 und 14 sind dabei bevorzugt durch ein Umbiegen der Randseiten 13 und 14 zu einem Winkel W von 10 bis 45 Grad bevorzugt von 30 Grad zu der durch die Öffnungen 8 und 9 verlaufenden Mittenachsen gebildet. Das Umbiegen der Randseiten 13 und 14 kann z.B. in den Stanzprozess integriert sein, indem die die Öffnungen 8 und 9 zuerst mit einer geringeren Öffnungsweite gestanzt und die Randseiten 13 und 14 dann in einem zweiten Schritt mittels eines Stempels mit einer geringfügig größeren Abmessung durch eine plastische Umformung zu den Wülsten 16 und 17 geformt werden.

## Patentansprüche

1. Gurtzunge (1) mit
- einem Grundkörper (2),
- einer den Grundkörper (2) zur Außenseite wenigstens teilweise abdeckenden Verkleidung (3),
- wenigstens einem zwischen dem Grundkörper (2) und der Verkleidung (3) angeordneten elektronischen Bauteil (5), wobei
- das elektronische Bauteil (5) auf einem Trägerteil (4) angeordnet ist, und
- das Trägerteil (4) über eine Formschlussgestaltung an dem Grundkörper (2) vorfixiert ist, wobei
dass
- das Trägerteil (4) eine an die Außenform des Grundkörpers (2) angepasste Form aufweist,
**dadurch gekennzeichnet, dass**
- der Grundkörper (2) wenigstens zwei Öffnungen (8,9) aufweist, welche durch einen Steg (7) voneinander getrennt sind, und
- die Öffnungen (8,9) wenigstens im Bereich der den Steg (7) begrenzenden Randseiten (13,14) verdickt sind, und
- das Trägerteil (4) wenigstens zwischen den verdickten Randseiten (13,14) der Öffnungen (8,9) an dem Grundkörper (2) formschlüssig vorfixiert ist.

2. Gurtzunge (1) nach Anspruch 1, **dadurch gekennzeichnet, dass**
- auf dem Trägerteil (4) wenigstens ein elektrischer Kontakt (6) und eine den elektrischen Kontakt (6) mit dem elektrischen Bauteil (6) verbindende elektrische Leitung (11) vorgesehen ist.

3. Gurtzunge (1) nach Anspruch 2, **dadurch gekennzeichnet, dass**
- das elektronische Bauteil (6), der elektrische Kontakt (6) und die elektrische Leitung (11) als ein vorgefertigtes Verbundbauteil (10) auf dem Trägerteil (4) angeordnet sind.

4. Gurtzunge (1) nach einem der vorangegangenen Ansprüche, **dadurch gekennzeichnet, dass**
- das elektronische Bauteil (5) und/oder der elektrische Kontakt (6) und/oder die elektrische Leitung (11) auf der dem Grundkörper (2) der Gurtzunge (1) zugewandten Seite des Trägerteils (4) angeordnet ist oder sind.

5. Gurtzunge (1) nach einem der vorangegangenen Ansprüche, **dadurch gekennzeichnet, dass**
- das Trägerteil (4) ein flächiges Bauteil mit einer an die Oberfläche des Grundkörpers (2) angepassten Formgebung ist.

6. Gurtzunge nach einem der Ansprüche 1 bis 5, **dadurch gekennzeichnet, dass**
- die Randseiten (13,14) in einem Winkel W von 10 bis 45 Grad, bevorzugt in einem Winkel W von 30 Grad zu einer Mittenachse der Öffnungen (8,9) zu verdickten Wülsten (16,17) geformt sind.

7. Gurtzunge (1) nach einem der vorangegangenen Ansprüche, **dadurch gekennzeichnet, dass**
- die Verkleidung (3) durch eine Umspritzung gebildet ist.

8. Sicherheitsgurteinrichtung mit einer Gurtzunge (1) nach einem der vorangegangenen Ansprüche, **dadurch gekennzeichnet, dass**
- die Sicherheitsgurteinrichtung zwei Gurtaufroller aufweist, auf denen jeweils ein Gurtbandabschnitt mit einem ersten Ende aufwickelbar ist, und dass die Gurtbandabschnitte mit jeweils einem zweiten Ende mit der Gurtzunge (1) verbunden sind.

9. Sicherheitsgurteinrichtung nach Anspruch 8, **dadurch gekennzeichnet, dass**
- ein Gurtschloss vorgesehen ist, welches ein mit dem elektronischen Bauteil (5) der Gurtzunge (1) zusammenwirkendes zweites elektronisches Bauteil aufweist.

10. Herstellverfahren zur Herstellung einer Gurtzunge (1) nach einem der Ansprüche 1 bis 7, **dadurch gekennzeichnet, dass**
- das Trägerteil (4) zusammen mit dem elektronischen Bauteil (5) an dem Grundkörper (2) vorfixiert wird, und
- das Trägerteil (4) dann durch Aufbringen der Verkleidung (3) zwischen dem Grundkörper (2) und der Verkleidung (3) abschließend fixiert wird.

11. Herstellverfahren nach Anspruch 10, **dadurch gekennzeichnet, dass**
- die Verkleidung (3) durch eine Umspritzung aufgebracht wird.

## Claims

1. A belt tongue (1) comprising
- a main body (2),
- a covering (3) which at least partially covers the main body (2) to the outside,
- at least one electronic component (5) arranged between the main body (2) and the covering (3),
- the electronic component (5) being arranged on a carrier part (4), and
- the carrier part (4) being pre-fixed to the main body (2) by means of a form-fitting design,
that
- the carrier part (4) has a shape adapted to the outer shape of the main body (2),
**characterized in that**
- the main body (2) comprises at least two openings (8, 9) which are separated from one another by a fixed link (7), and
- the openings (8, 9) are thickened at least in the region of the edge sides (13, 14) delimiting the fixed link (7), and
- the carrier part (4) is pre-fixed to the main body (2) in a form-fitting manner at least between the thickened edge sides (13, 14) of the openings (8, 9).

2. The belt tongue (1) according to claim 1, **characterized in that**
- at least one electrical contact (6) and an electrical line (11) connecting the electrical contact (6) to the electrical component (6) are provided on the carrier part (4).

3. The belt tongue (1) according to claim 2, **characterized in that**
- the electronic component (6), the electrical contact (6) and the electrical line (11) are arranged on the carrier part (4) as a prefabricated composite component (10).

4. The belt tongue (1) according to any of the preceding claims, **characterized in that**
- the electronic component (5) and/or the electrical contact (6) and/or the electrical line (11) is/are arranged on the side of the carrier part (4) that faces the main body (2) of the belt tongue (1).

5. The belt tongue (1) according to any of the preceding claims, **characterized in that**
- the carrier part (4) is a planar component which has a shape adapted to the surface of the main body (2).

6. The belt tongue according to any of claims 1 to 5, **characterized in that**
- the edge sides (13, 14) are formed into thickened beads (16, 17) at an angle W of 10 to 45 degrees, preferably at an angle W of 30 degrees to a central axis of the openings (8, 9).

7. The belt tongue (1) according to any of the preceding claims, **characterized in that**
- the covering (3) is formed by overmolding.

8. A safety belt device comprising a belt tongue (1) according to any of the preceding claims, **characterized in that**
- the safety belt device comprises two belt retractors, on each of which a belt portion having a first end can be wound up, and **in that** the belt portions are connected to the belt tongue (1) by a second end in each case.

9. The safety belt device according to claim 8, **characterized in that**
- a belt buckle is provided which comprises a second electronic component interacting with the electronic component (5) of the belt tongue (1).

10. A production method for producing a belt tongue (1) according to any of claims 1 to 7, **characterized in that**
- the carrier part (4) is pre-fixed, together with the electronic component (5), to the main body (2), and
- the carrier part (4) is then finally fixed between the main body (2) and the covering (3) by applying the covering (3).

11. The production method according to claim 10, **characterized in that**
- the covering (3) is applied by overmolding.

## Revendications

1. Languette de ceinture (1) comportant
- un corps de base (2),
- un revêtement (3) recouvrant au moins partiellement le corps de base (2) vers le côté extérieur,
- au moins un composant électronique (5) disposé entre le corps de base (2) et le revêtement (3), dans laquelle
- le composant électronique (5) est disposé sur une partie formant support (4), et
- la partie formant support (4) est préfixée au corps de base (2) par l'intermédiaire d'une structure à complémentarité de forme, dans laquelle
que
- la partie formant support (4) présente une forme adaptée à la forme extérieure du corps de base (2),
**caractérisée en ce que**
- le corps de base (2) présente au moins deux ouvertures (8, 9) qui sont séparées l'une de l'autre par une traverse (7), et
- les ouvertures (8, 9) sont épaissies au moins dans la zone des côtés bords (13, 14) délimitant la traverse (7), et
- la partie formant support (4) est préfixée par complémentarité de forme au corps de base (2) au moins entre les côtés bords (13, 14) épaissis des ouvertures (8, 9).

2. Languette de ceinture (1) selon la revendication 1, **caractérisée en ce que**
- au moins un contact électrique (6) est prévu sur la partie formant support (4) et un câble électrique (11) qui connecte le contact électrique (6) et le composant électrique (6) est prévu.

3. Languette de ceinture (1) selon la revendication 2, **caractérisée en ce que**
- le composant électronique (6), le contact électrique (6) et le câble électrique (11) sont disposés sur la partie formant support (4) sous forme de composant composite préfabriqué (10).

4. Languette de ceinture (1) selon l'une des revendications précédentes, **caractérisée en ce que**
- le composant électronique (5) et/ou le contact électrique (6) et/ou le câble électrique (11) sont disposés sur le côté de la partie formant support (4) tourné vers le corps de base (2) de la languette de ceinture (1).

5. Languette de ceinture (1) selon l'une des revendications précédentes, **caractérisée en ce que**
- la partie formant support (4) est un composant plat comportant une forme adaptée à la surface du corps de base (2).

6. Languette de ceinture selon l'une des revendications 1 à 5,
**caractérisée en ce que**
- les côtés bords (13, 14) sont formés en bourrelets épaissis (16, 17) selon un angle W allant de 10 à 45 degrés, de préférence à un angle W de 30 degrés par rapport à un axe médian des ouvertures (8, 9).

7. Languette de ceinture (1) selon l'une des revendications précédentes, **caractérisée en ce que**
- le revêtement (3) est formé par un surmoulage.

8. Dispositif de ceinture de sécurité comportant une languette de ceinture (1) selon l'une des revendications précédentes, **caractérisé en ce que**
- le dispositif de ceinture de sécurité présente deux enrouleurs de ceinture sur lesquels respectivement une section formant sangle de ceinture peut être enroulée par une première extrémité, et **en ce que** les sections formant sangle de ceinture sont reliées par respectivement une seconde extrémité à la languette de ceinture (1).

9. Dispositif de ceinture de sécurité selon la revendication 8,
**caractérisé en ce que**
- une boucle de ceinture est prévue, laquelle présente un second composant électronique coopérant avec le composant électronique (5) de la languette de ceinture (1).

10. Procédé de fabrication pour la fabrication d'une languette de ceinture (1) selon l'une des revendications 1 à **7,caractérisé en ce que**
- la partie formant support (4) est préfixée, conjointement au composant électronique (5), au corps de base (2), et
- la partie formant support (4) est ensuite fixée définitivement en appliquant le revêtement (3) entre le corps de base (2) et le revêtement (3).

11. Procédé de fabrication selon la revendication 10, **caractérisé en ce que**
- le revêtement (3) est appliqué par un surmoulage.
